# EUROPEAN PATENT APPLICATION

(11) **EP 4 568 315 A1**
(43) Date of publication of application: **11.06.2025**
(21) Application number: 22893964.1
(22) Date of filing: 04.08.2022
(51) Int. Cl.: H04W 16/18

(54) **REGIONAL CONTENT DISTRIBUTION METHOD BASED ON 5G EDGE COMPUTING**

(71) Applicant: Zhejiang 99cloud Information Service Co., Ltd., Huzhou, Zhejiang 313000 (CN)
(72) Inventor: KAN, Yifei, Huzhou, Zhejiang 313000 (CN); JING, Liuqing, Huzhou, Zhejiang 313000 (CN); LI, Dan, Huzhou, Zhejiang 313000 (CN)
(74) Representative: Serrano Irurzun, Javier
(86) International application number: PCT/CN2022/110142
(87) International publication number: WO 2024/026759

(57) **Abstract**

The present disclosure relates to the field of network control and services, in particular to content publishing and information pushing. The present disclosure is achieved by the following technical solution: a region content distribution method based on 5G edge computing, includes the following steps: S01, region division; wherein in the step, a 5G network is divided into different network single regions according to different physical regions; S02, node construction; wherein a control node and operation nodes are constructed, and each network single region has at least one operation node; S03, configuration of the control node; S04, configuration of the operation nodes; and S05, content sending. The present disclosure aims at providing the region content distribution method based on 5G edge computing to perform region division on the network. Different regions have different types of network services, such that a network administrator can push different pieces of information and provide different network services to different regions.

## Description

### TECHNICAL FIELD

The present disclosure relates to the field of network control and services, in particular to content publishing and information pushing.

### BACKGROUND

In the traditional Internet field, users have access to a network in a wired manner via network cables. By means of such connection manner, due to a fixed address of each user, both network IP (Internet Protocol) address and addresses of the users in reality are easy to manage in a centralized manner. For example, computers in school dormitory regions may provide network services of different types and permissions for students at different grades, and may also push different contents by the network.

With the progress of the network and the popularity of mobile equipment, portable mobile equipment such as smart phones, tablet computers and laptops also have access to the network via 4G (4th Generation Mobile Communication Technology), 5G (5th Generation Mobile Communication Technology) and WIFI, so administrators need to push contents to the mobile equipment through a wireless management system.

As mentioned in the Chinese patent document, namely an information pushing system and an information pushing method with the publication number of CN201310065301.8, the information pushing system can be suitable for mobile terminals, and contains a pushing server, which can push information texts to clients, such that group information can be conveniently announced.

However, this technical solution also has some defects. On one hand, pushed objects cannot be distinguished. It is impossible to distinguish different objects in a centralized and efficient manner at low management costs, and thus, information with different contents cannot be pushed to different objects. On the other hand, besides information pushing, different groups cannot be managed differentially and adaptively, and different functional services cannot be provided for different groups.

### TECHNICAL PROBLEM

The present disclosure aims at providing a region content distribution method based on 5G edge computing to perform region division on a network, different regions have different types of network services, such that a network administrator can push different pieces of information and provide different network services to different regions.

### TECHNICAL SOLUTION

The present disclosure is achieved by the following technical solution: a region content distribution method based on 5G edge computing is characterized by including the following steps:
S01, region division; wherein
a 5G network is divided into different network single regions according to different physical regions;
S02, node construction; wherein,
a control node and operation nodes are constructed, and each network single region has at least one operation node;
S03, configuration of the control node; wherein
a configuration file of the control node is edited, and the configuration file contains service type data of the operation nodes;
S04: configuration of the operation nodes; wherein
the control node correspondingly sends the configuration file to the operation nodes, and each operation node obtains a service permission according to the obtained configuration file; and
S05, content sending; wherein
the control node sends specific service content data to each operation node, and the operation nodes perform information interaction on the service content data and network equipment in the network single regions.

As a preference of the present disclosure, in S01, a network administrator files a slicing application to a network provider, and the network provider performs a specific division operation for the network single regions.

As a preference of the present disclosure, the operation nodes and the control node are both constructed in a software form, and a physical installation position of the control node is closer to physical positions of the corresponding network single regions than physical installation positions of the operation nodes.

As a preference of the present disclosure, the control node is arranged on a cloud server, and the operation nodes are arranged in edge computing nodes.

As a preference of the present disclosure, the edge computing nodes are physical servers provided by a network operator.

As a preference of the present disclosure, in S03, a step of content storage designation is further contained, and in the step, data contents required to be stored by the control node are edited.

As a preference of the present disclosure, in S03, a step of system operation monitoring editing is further contained, and in the step, the control node is edited to monitor a health degree of each operation node in real time.

As a preference of the present disclosure, when new network terminal equipment has access to the network, and it is not located in any network single region, the control node distributes the operation node corresponding to the closest network single region according to geographical position information thereof to provide a communication service for the network terminal equipment.

### BENEFICIAL EFFECTS

In conclusion, the present disclosure has the following beneficial effects:
1. Network service types supported by each network single region are individually managed.
2. Since information browsing contents are obtained by independently receiving, by each single region, data from the control node, pushing information by the control node via packet sending may also be managed in a regionalized manner.
3. The control node monitors and stores the health degree indicator of each operation node, facilitating network pre-warning and network maintenance.
4. A content distribution system and the content distribution method rely on a 5G network platform. Since the 5G network has high capacity to bear terminal equipment in unit region, connection delay between the terminal equipment and the operation nodes is shortened.

### BRIEF DESCRIPTION OF THE DRAWINGS

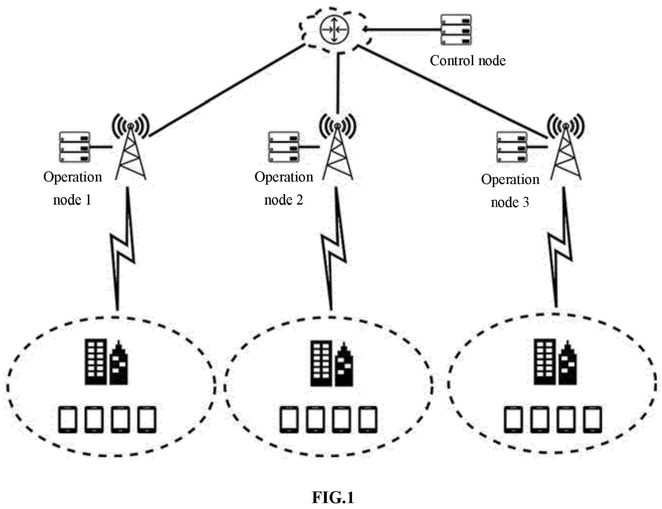

FIG. 1 is a schematic diagram of Embodiment 1.

### DETAILED DESCRIPTION OF THE PRESENT DISCLOSURE

The present disclosure will be further described in detail below with reference to drawings.

The specific embodiment only explains the present disclosure instead of limiting it. Those skilled in the art can make modifications without inventive contributions according to requirements after reading the specification, however, the modifications are protected by patent laws as long as they fall within the scope of the claims of the present disclosure.

Embodiment 1: in a region content distribution method based on 5G edge computing, S01, region division is first executed. In the step, a 5G network is divided with geographic regions as standards according to an intention of a network administrator, to form different network single regions. As shown in FIG. 1, which is a schematic diagram of an overall 5G network, each oval dotted line region in the figure is an independent network single region, and the network single regions are a single region 1, a single region 2 and a single region 3 from left to right.

In actual operation, the network administrator submits an application for region division to a network operator, for example, an enterprise in charge of network management and network services submits the application for region division to 5G network operators such as China Mobile, China Telecom and China Unicom, and the network operator divides the network into the single region 1, the single region 2 and the single region 3 according to the intention of the enterprise. For example, a school serves as the single region 1, a mall serves as the single region 2, and a residence community serves as the single region 3. That is, users in the community surf the Internet by mobile phones and other portable smart terminals via a mobile network (such as 5G), which are all connected to the network single region 3.

Then S02 of node construction is executed. In the step, mainly two types of nodes, namely a control node and operation nodes, need to be constructed. An actual form of the two kinds of nodes is a software form, and the nodes are written by software developers by selecting and using a programming language in the prior art, such as C language, JAVA, C# and VB. However, the quantities, arrangement positions and functions of the two kinds of nodes are different.

The quantity of the control nodes may be small. In the embodiment, only one control node may be arranged in the region. Each network single region independently has one operation node. As shown in FIG. 1, the operation node 1, the operation node 2 and the operation node 3 are respectively arranged in the single region 1, the single region 2 and the single region 3.

The operation nodes should be spatially closer to the corresponding network single region. In the embodiment, programs of the operation nodes are installed in edge computing nodes. The edge computing nodes are physical servers provided by the network operator. The edge computing nodes are geographically located near a base station of the network operator. For example, the operation node 1 in FIG. 1 is installed in the physical server at the base station of the operator near the school.

However, the control node is different therefrom, and it may be installed on cloud, namely a cloud server. It is not required to be geographically close to the geographic position of any network single region.

Then S03 of configuration of the control node is executed. The network administrator edits a configuration file of the control node, wherein the configuration file contains service type data of the operation nodes. Specifically, the control node has a function of managing each operation node, so that it is required to configure service types allowed by each operation node. For example, when the school serves as the single region 1, the service type of the operation node 1 corresponding thereto is a common information browsing service type. When the shopping mall serves as the single region 2, the service types of the operation node 2 corresponding thereto further include a game application service type besides the common information browsing service type. When the community serves as the single region 3, the service types of the operation node 3 corresponding thereto further include a live streaming application service type besides the information browsing service type and the game application service type.

In the step, some other steps for setting the control node are further included. For example, storage and monitoring contents of the control node are set. That is, the control node is set to store which types of important data and monitor which contents in real time. In actual application, the control node usually also needs to monitor and store a health degree indicator of each operation node, facilitating network pre-warning and network maintenance.

Then S04 of configuration of the operation nodes is executed. The control node correspondingly sends the configuration file to each operation node, and each operation node automatically obtains its own service permission according to the obtained configuration file. So far, dividing and slicing, corresponding to each physical region, of the 5G network has been completed, the network service types allowed by each single region have also been designated, that is, a whole region content distribution system based on 5G edge computing has been established.

As a result, the system gets into a normal use stage, namely, S05 of content sending.

In the normal use stage of the content distribution system, the control node sends specific service content data to each operation node. For example, corresponding information browsing contents are sent to the operation node 1, such that all mobile phones, tablet computers and other smart equipment surfing the Internet in the single region 1 over the 5G network can perform information interaction with the operation node 1. Similarly, the control node sends data corresponding to game contents to the operation node 2 and the operation node 3, and sends data corresponding to live streaming contents to the operation node 3.

In this way, on one hand, the network service types supported by each network single region are individually managed, for example, a game service is not supported in the single region where the school is located. On the other hand, since the information browsing contents are also obtained by independently receiving, by each single region, data from the control node, pushing information by the control node via packet sending may also be managed in a regionalized manner. For example, the control node may independently send pushing information of open classes in this week to all network equipment in the region 1 by the operation node 1, instead of sending it to the region 1, the region 2 and the region 3.

Moreover, the content distribution system and the content distribution method rely on a 5G network platform. Since the 5G network has high capacity to bear terminal equipment in unit region, connection delay between the terminal equipment and the operation nodes is shortened.

Embodiment 2: Embodiment 2 further has functions of position identification and automatic distribution on the basis of Embodiment 1. Specifically, when a new network terminal uses a 5G network, a control node identifies a corresponding geographic position thereof. When a single region exists in the geographic position, the network terminal will naturally communicate with the operation node corresponding to the single region. If no single region exists at the position, (for example, network management equipment in the single region is in a maintenance state now), the control node distributes an operation node closest to the position to provide a network communication service for the network terminal.

Embodiment 3: Embodiment 3 further has functions of position identification and switching across the single regions on the basis of Embodiment 1.

When a user walks to a single region 3 from a single region 1, a control node can identify the change in geographic position information of a network terminal, so as to remind the user whether the single region 1 providing a network service should be switched into the single region 3. If the user agrees to such switching, the user may receive information pushing contents corresponding to the single region 3, and may also use network service types in the single region 3. If the user does not agree to such switching, the user will continue to interact with data of an operation node 1, received pushing contents and obtained network services will keep unchanged, however, a delay will be correspondingly prolonged due to long-distance communication across the single regions.

## Claims

1. A region content distribution method based on 5G edge computing, **characterized by** comprising the following steps: S01, region division; wherein in the step, a 5G network is divided into different network single regions according to different physical regions; S02, node construction; wherein a control node and operation nodes are constructed, and each network single region has at least one operation node; S03, configuration of the control node; wherein a configuration file of the control node is edited, and the configuration file contains service type data of the operation nodes; S04: configuration of the operation nodes; wherein the control node correspondingly sends the configuration file to the operation nodes, and each operation node obtains a service permission according to the obtained configuration file; and S05, content sending; wherein the control node sends specific service content data to each operation node, and the operation nodes perform information interaction on the service content data and network equipment in the network single regions.

2. The region content distribution method based on 5G edge computing according to claim 1, **characterized in that**, in S01, a network administrator files a slicing application to a network provider, and the network provider performs a specific division operation for the network single regions.

3. The region content distribution method based on 5G edge computing according to claim 1, **characterized in that**, the operation nodes and the control node are both constructed in a software form, and a physical installation position of the control node is closer to physical positions of the corresponding network single regions than physical installation positions of the operation nodes.

4. The region content distribution method based on 5G edge computing according to claim 3, **characterized in that**, the control node is arranged on a cloud server, and the operation nodes are arranged in edge computing nodes.

5. The region content distribution method based on 5G edge computing according to claim 4, **characterized in that**, the edge computing nodes are physical servers provided by a network operator.

6. The region content distribution method based on 5G edge computing according to claim 1, **characterized in that**, in S03, a step of content storage designation is further contained, and in the step, data contents required to be stored by the control node are edited.

7. The region content distribution method based on 5G edge computing according to claim 6, **characterized in that**, in S03, a step of system operation monitoring editing is further contained, and in the step, the control node is edited to monitor a health degree of each operation node in real time.

8. The region content distribution method based on 5G edge computing according to claim 1, **characterized in that**, when new network terminal equipment has access to the network, and it is not located in any network single region, the control node distributes the operation node corresponding to the closest network single region according to geographical position information thereof to provide a communication service for the network terminal equipment.
